# EUROPEAN PATENT SPECIFICATION

(11) **EP 3 198 458 B1**
(45) Date of publication and mention of the grant of the patent: **18.08.2021**
(21) Application number: 15844414.1
(22) Date of filing: 31.08.2015
(51) Int. Cl.: G06F 13/16, G06F 12/08, G06F 15/16, G06F 15/78, G06F 3/06, H04L 29/06, G06F 21/72

(54) **TECHNOLOGIES FOR ACCELERATING COMPUTE INTENSIVE OPERATIONS USING SOLID STATE DRIVES**
TECHNOLOGIEN ZUR BESCHLEUNIGUNG VON RECHENINTENSIVEN OPERATIONEN MIT FESTLAUFWERKEN
TECHNOLOGIES PERMETTANT D'ACCÉLÉRER DES OPÉRATIONS DE CALCUL INTENSIVES AU MOYEN DE DISQUES DURS ÉLECTRONIQUES

(30) Priority: 26.09.2014 US 201414498030
(43) Date of publication of application: 02.08.2017
(73) Proprietor: Intel Corporation, Santa Clara, CA 95054 (US)
(72) Inventor: KHAN, Jawad B., Cornelius, Oregon 97113 (US); GRIMSRUD, Knut S., Forest Grove, Oregon 97116 (US); COULSON, Richard L., Portland, Oregon 97229 (US)
(74) Representative: Rummler, Felix
(86) International application number: PCT/US2015/047755
(87) International publication number: WO 2016/048598

(56) References cited:
- US-A1- 2009 307 416
- US-A1- 2012 054 236
- US-A1- 2013 191 555
- US-A1- 2013 268 701
- US-A1- 2014 201 431
- US-B1- 8 626 995
- US-B1- 8 819 335
- ARUP DE ET AL: "Minerva: Accelerating Data Analysis in Next-Generation SSDs", FIELD-PROGRAMMABLE CUSTOM COMPUTING MACHINES (FCCM), 2013 IEEE 21ST ANNUAL INTERNATIONAL SYMPOSIUM ON, IEEE, 28 April 2013 (2013-04-28), pages 9-16, XP032431107, DOI: 10.1109/FCCM.2013.46 ISBN: 978-1-4673-6005-0
- YANGWOOK KANG ET AL: "Enabling cost-effective data processing with smart SSD", MASS STORAGE SYSTEMS AND TECHNOLOGIES (MSST), 2013 IEEE 29TH SYMPOSIUM ON, 1 May 2013 (2013-05-01), pages 1-12, XP055383730, DOI: 10.1109/MSST.2013.6558444 ISBN: 978-1-4799-0217-0
- JAEYOUNG DO ET AL: "Query processing on smart SSDs : opportunities and challenges", PROCEEDINGS OF THE 2013 INTERNATIONAL CONFERENCE ON MANAGEMENT OF DATA, SIGMOD '13, 1 January 2013 (2013-01-01), pages 1221-1230, XP055383734, New York, New York, USA DOI: 10.1145/2463676.2465295 ISBN: 978-1-4503-2037-5
- SANGYEUN CHO ET AL: "Active disk meets flash", PROCEEDINGS OF THE 27TH INTERNATIONAL ACM CONFERENCE ON INTERNATIONAL CONFERENCE ON SUPERCOMPUTING, ICS '13, 1 January 2013 (2013-01-01), pages 91-102, XP055232548, New York, New York, USA DOI: 10.1145/2464996.2465003 ISBN: 978-1-4503-2130-3

## Description

### TECHNICAL FIELD

The present disclosure relates to technologies for accelerating compute intensive operations. In particular, the present disclosure relates to technologies for accelerating compute intensive operations with one or more solid state drives.

### BACKGROUND

Compute intensive operations such as encryption, decryption, compression/decompression, hash computation, low level image processing algorithms (such as but not limited to filters, thresholding, etc.), DNA sequence matching and search algorithms, encoding, decoding algorithms, etc. can require significant central processing unit (CPU) cycles and/or other resources to complete. As the need for and complexity of compute intensive operations have increased, technologies have been developed to offload the performance of such operations from the CPU to dedicated hardware. For example, stand-alone encryption and decryption accelerators have been developed to perform compute intensive encryption and decryption operations. Such accelerators may be designed for the specific performance of certain encryption and decryption operations, and therefore in many cases they can perform such operations faster than a general purpose processor. They may also reduce the number of CPU cycles needed to perform such operations, and thus may free up the CPU for other operations even when encryption, decryption, or other compute intensive operations are being performed by the accelerator. Although effective for their intended purpose, stand-alone hardware accelerators can be quite costly. Indeed the cost of stand-alone hardware accelerators can be prohibitive in some instances, e.g., when a plurality of stand-alone hardware accelerators are to be used in a server (also referred to herein as a "host system") that is configured to provide accelerated compute services to one or more clients.

"Minerva: Accelerating Data Analysis in Next-Generation SSDs", Arup et al, 2013 21st ANNUAL IEEE Symposium on Field-Programmable Custom Computing Machines (FCCM), discusses an FPGA-based system to execute application-specific operations in the NVM controller and evaluate its performance on two microbenchmarks and a key-value store.

"Enabling Cost-Effective Data Processing With Smart SSD", Kang et al, 2013 IEEE 29th Symposium On Mass Storage Systems And Technologies (MSST), discusses a Smart SSD model, which pairs in-device processing with a powerful host system capable of handling data-oriented tasks without modifying operating system code.

"Query Processing On Smart SSDs: Opportunities and Challenges", Do et al, Proceedings Of 2013 International Conference On Management Of Data, discusses use of Smart SSDs for relational analytic query processing.

US8819335 discusses a system and method of providing enhanced data processing and analysis in an infrastructure for distributed computing and large-scale data processing.

US2013/191555 discusses an intelligent storage controller adapted to directly perform the data transformation operations on the data controlled by the controller, under the direction of the computer running the application, thereby offloading this processing entirely to the intelligent storage controller.

"Active disk meets flash", SANGYEUN CHO et al., DOI: 10.1145/2464996.2465003, ISBN: 978-1-4503-2130-3, discloses an Intelligent SSD, comprising a programmable embedded processor.

US8626995 discusses a flexible sequence design architecture for a solid state memory controller.

US2012/054236 discusses a hardware accelerator that assists a host database system in processing its queries.

US2014/0201431 discuses a memory interface where requests may be routed to memory modules over a DRAM memory channel in order to service compute and/or distributed file system commands.

### Summary of the Invention

The present invention is defined in the appended independent claims.

Preferred embodiments of the invention are defined in the associated dependent claims.

### BRIEF DESCRIPTION OF THE DRAWINGS

Features and advantages of embodiments of the claimed subject matter will become apparent as the following Detailed Description proceeds, and upon reference to the Drawings, wherein like numerals depict like parts, and in which:
FIG. 1 illustrates a block diagram of a system for accelerating compute intensive operations consistent with the present disclosure;
FIG. 2 is a more detailed block diagram of the system of FIG. 1 , consistent with various embodiments of the present disclosure;
FIG. 3 is a block diagram showing further details of a server and a solid state drive array consistent with various embodiments of the present disclosure.
FIG. 4 is a flow chart of example operations consistent with an example method of accelerating compute intensive operations consistent with the present disclosure.
FIGS. 5A and B depict additional system configurations consistent with various embodiments of the present disclosure.

### DETAILED DESCRIPTION

The technologies described herein may be implemented using one or more devices, e.g., in a client-server architecture. The terms "device," "devices," "electronic device" and "electronic devices" are interchangeably used herein to refer individually or collectively to any of the large number of electronic devices that may be used as a client and/or a server consistent with the present disclosure. Non-limiting examples of devices that may be used in accordance with the present disclosure include any kind of mobile device and/or stationary device, such as but not limited to cameras, cell phones, computer terminals, desktop computers, electronic readers, facsimile machines, kiosks, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. Such devices may be portable or stationary. wired telephones, combinations thereof, and the like. Such devices may be portable or stationary.

The terms "client" and "client device" are interchangeably used herein to refer to one or more electronic devices that may perform client functions consistent with the present disclosure. In contrast, the terms "server" and "server device" are interchangeably used herein to refer to one or more electronic devices that may perform server functions consistent with the present disclosure. In some embodiments the server devices may be in the form of a host system that is configured to provide one or more services (e.g., compute acceleration services) to another device such as a client. In such embodiments the server devices may form part of, include, or be in the form of a data center or other computing base. The term "host system" is interchangeably used herein with the terms "server" and "server device."

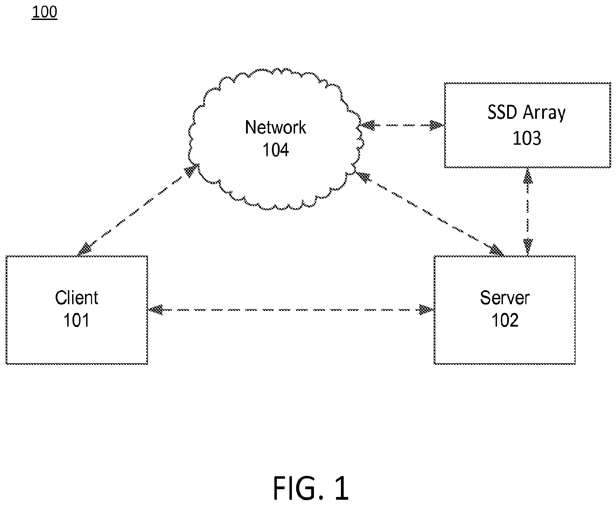

FIGS. 1-3 illustrate exemplary systems in accordance with the present disclosure as including a single client and a single server. Such illustrations are for the sake of example, and it should be understood that any number of clients and servers may be used. Indeed, the technologies described herein may be implemented with a plurality (e.g., 2, 5, 10, 20, 50, 100, 1000, 10,000 or more) client and/or server devices. Moreover the number of servers need not correlate to the number of clients. Indeed in some embodiments the technologies described herein utilize relatively few (e.g., 1 or 2) servers to support and/or provide compute acceleration services to a relatively large number (e.g., 100, 1000, 10,000) etc. of clients. Therefore while the present disclosure may refer to a client and/or a server in the singular, such expressions should be interpreted as also encompassing the plural form. Similarly, the designation of a device as a client or server is for clarity, and it should be understood that in some embodiments a client device may be configured to perform server functions, and a server device may be configured to perform client functions consistent with the present disclosure.

As used in any embodiment herein, the term "module" may refer to software, firmware, circuitry, and/or combinations thereof that is/are configured to perform one or more operations consistent with the present disclosure. Software may be embodied as a software package, code, instructions, instruction sets and/or data recorded on non-transitory computer readable storage mediums. Firmware may be embodied as code, instructions or instruction sets and/or data that are hard-coded (e.g., nonvolatile) in memory devices. "Circuitry", as used in any embodiment herein, may comprise, for example, singly or in any combination, hardwired circuitry, programmable circuitry such as computer processors comprising one or more individual instruction processing cores, data machine circuitry, software and/or firmware that stores instructions executed by programmable circuitry. The modules may, collectively or individually, be embodied as circuitry that forms a part of one or more electronic devices, as defined previously. In some embodiments one or more modules described herein may be in the form of logic that is implemented at least in part in hardware to perform one or more client and/or server functions consistent with the present disclosure.

The phrase "close range communication network" is used herein to refer to technologies for sending/receiving data signals between devices that are relatively close to one another, i.e., via close range communication. Close range communication includes, for example, communication between devices using a BLUETOOTH™ network, a personal area network (PAN), near field communication, a ZigBee network, a wired Ethernet connection, combinations thereof, and the like. In contrast the phrase "long range communication network" is used herein to refer to technologies for sending/receiving data signals between devices that are a significant distance away from one another, i.e., using long range communication. Long range communication includes, for example, communication between devices using a WiFi network, a wide area network (WAN) (including but not limited to a cell phone network (3G, 4G, etc. and the like), the internet, telephony networks, combinations thereof, and the like.

The terms "SSD," "SSDs" and "solid state drive" are interchangeably used herein to refer to any of the wide variety of data storage devices in which integrated circuit assemblies (e.g., non-volatile random access memory (RAM) assemblies) are used to store data persistently. Such terms also encompass so-called "hybrid" drives, in which a solid state drive may be used (e.g., as cache) in combination with a hard disk drive, e.g., which includes a magnetic recording medium. In any case, an SSD may be understood to include non-volatile memory such as but not limited to flash memory such as negated and not and (NAND) and/or not or (NOR) memory, phase change memory (PCM), three dimensional cross point memory, resistive memory, nanowire memory, ferro-electric transistor random access memory (FeTRAM), magnetoresistive random access memory (MRAM) memory that incorporates memristor technology, spin transfer torque (STT)-MRAM, combinations thereof, and the like.

The phrase "compute intensive operations" is used herein to refer to any of a wide variety of computing operations that may require significant processor cycles to complete. Non-limiting examples of compute intensive operations include encryption, decryption, compression/decompression, hash computation, low level image processing algorithms (such as but not limited to filters, thresholding,etc.), DNA sequence matching and search algorithms, encoding algorithms, decoding algorithms, combinations thereof, and the like. Of course the aforementioned operations are examples only, and other compute intensive operations are envisioned and encompassed by the present disclosure.

As noted in the background standalone hardware accelerators have been developed and implemented to accelerate compute intensive operations such as data encryption/decryption, video encoding/decoding, network packet routing, etc. Although such standalone hardware accelerators may be effective for their intended purpose, they can be quite expensive. Standalone hardware accelerators can therefore represent a significant portion of the cost of server or other computing base that is configured to provide compute acceleration services (e.g., accelerated encryption, decryption, etc.) for one or more clients, particularly if the server is to include a plurality of such accelerators. Moreover, performance of compute intensive operations may not scale well with certain standalone hardware accelerators. That is in some instances, increasing the number of standalone hardware accelerators may not result in a corresponding (e.g., 1:1) increase in the performance of compute intensive operations.

Electronic devices are increasingly being equipped with solid state drives, which are generally used for data storage. With this in mind, SSDs include a hardware-based controller (hereinafter, "SSD controller") that includes a high bandwidth (e.g., multi-gigabyte per second) hardware encryption/decryption engine. Although the hardware encryption/decryption engine of an SSD is capable of performing various operations at high speed, in many instances it is configured to perform data at rest encryption and/or decryption, and/or to encrypt/decrypt data as part of the drive's normal read/write flow. For example, some SSD's may include a hardware encryption/decryption engine that is configured to encrypt/decrypt data stored on the SSD with one or more encryption algorithms, such as but not limited to the Advanced Encryption Standard (AES) algorithm specified in FIPS Publication 197 and/or ISO/IEC 18033-3. With existing technology, the hardware encryption/decryption engines of an SSD may perform encryption/decryption of data many times faster than such encryption/decryption could be performed in software (e.g., executed by a general purpose processor of a client or server).

Although the performance of the hardware encryption/decryption engine of many SSDs is interesting, in a typical system the SSD controller and in particular the SSD controller's hardware encryption/decryption engine is not available to the client and/or server device, e.g., for the performance of data encryption/decryption or other compute intensive operations. That is unlike standalone hardware accelerators, the hardware encryption/decryption engine of an SSD is generally not directly accessible by a host system (client or server) for the performance of compute intensive operations.

With the foregoing in mind the present disclosure generally relates to technologies for accelerating compute intensive operations that capitalize on one or more hardware acceleration engines that are present in many SSDs. In particular and as will be described below, the technologies described herein can expose the hardware acceleration engines of an SSD to a host system. As a result the host system may use the SSD's hardware acceleration engine(s) to accelerate compute intensive operations such as those identified above. As will become clear from the following, use of the hardware acceleration engine in this manner need not compromise the solid state drive's traditional data storage function. Moreover in some embodiments acceleration of compute intensive operations by the technologies described herein may scale with the number of SSDs.

One aspect of the present disclosure therefore relates to systems for accelerating compute intensive operations. For the sake of clarity and ease of understanding, the present disclosure will proceed to describe various embodiments in which the compute intensive operation to be accelerated is the performance of an encryption/decryption algorithm, or some portion thereof. It should be understood that the technologies described herein are not limited to accelerating encryption/decryption operations, and that they may be used to accelerate any suitable type of compute intensive operation including but not limited to those noted above and/or any portion thereof.

In this regard reference is made to FIG. 1, which is a block diagram of an example system for accelerating compute intensive operations consistent with the present disclosure. As shown, system 100 includes client 101, server 102, and solid state drive (SSD) array 103.

Client 101 may be any suitable electronic device, as defined above. Without limitation, in some embodiments client 101 is in the form of one or more cellular phones, desktop computers, electronic readers, laptop computers, set-top boxes, smart phones, tablet personal computers, televisions, or ultra-mobile personal computers. Regardless of its form, in some embodiments client 101 (or an operator thereof) may have a compute intensive operation (also referred to herein as a "job") for which acceleration is desired. For example, client 101 (or an operator thereof) may wish to have a set of data encrypted. In such instances and as will be described in detail below, client 101 is configured to communicate all or a portion of the job (in the example case, all or a portion of the data for encryption) to server 102 for acceleration.

Like client 101, server 102 may be any suitable electronic device. Without limitation, server 102 in some embodiments is in the form of one or more server computers, such as one or more blade servers, rack mount servers, combinations thereof, and the like. In some example embodiments server 102 is a standalone server. In other example embodiments server 102 may be one or more servers in an array of servers, such as may be found in a data center or other aggregated computing base. In any case server 102 may be configured to receive a job from client 101 for acceleration, and to transmit the job to one or more SSDs of SSD array 103 for acceleration. In particular and as will be described below, server 102 may be configured to transmit all or a portion of a job received from client 101 to at least one SSD of SSD array 103, so as to cause a hardware acceleration engine of the SSD to perform at least a portion of the job. Server 102 may then retrieve or otherwise receive the output of the operations performed by the hardware acceleration engine, and communicate that output to client 101.

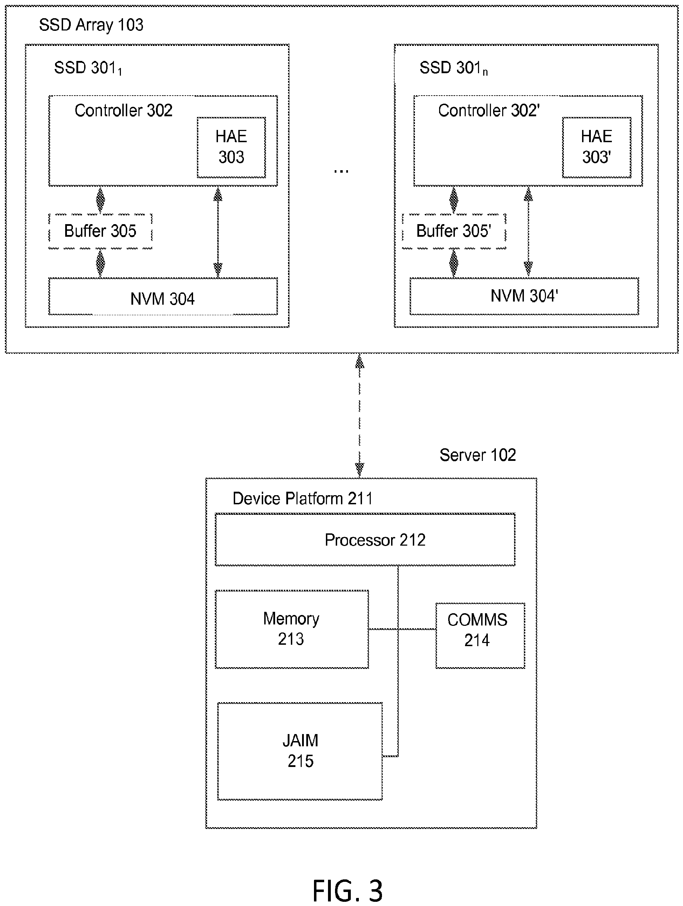

SDD array 103 may include one or more solid state drives. For the sake of example, the present disclosure describes various embodiments in which SSD array includes one SSD or two SSD's (as shown in FIG. 3, for example). It should be understood that such description is for the sake of example only, and that any number of SSD's may be used. Indeed, the present disclosure envisions embodiments in which a plurality of SSDs are included in SSD array 103, e.g., in which SSD 103 includes from greater than or equal to about 2, about 5, about 10, about 100, about 1000 or more SSD's. Again such ranges are for the sake of example only.

The SSD's of SSD array 103 may be in any suitable form factor or configuration. Non-limiting examples of suitable SSD form factors include SSD's that are in any of the variety of standard hard disk drive form factors (e.g., 2.5 inch, 3.5 inch, 1.8 inch), mobile form factors such as mobile serial advanced technology attachment form factor, peripheral connect interface (PCI) mini card form factor, a disk on a module form factor, a hybrid disk form factor, combinations thereof, and the like. In some embodiments one or more of the SSD's in SSD array 103 is an SSD sold by INTEL@ corporation, e.g., under the series 300 or higher designation.

For the sake of illustration and ease of understanding, FIGS. 1, 2 and 3 depict systems in which SSD array 103 is illustrated as being separate from server 102. In such instances it may be understood that SSD array 103 may be part of a computing base that is separate from but accessible by server 102. Thus for example, SSD array 103 may form part of, be in the form of, or include a computing base that is separate from server 102. That is, SSD array 103 may be housed in the same or different data center, server farm, housing, etc. from server 102. Of course it should be understood that such illustration is for the sake of example only, and that SSD array may be integral with or otherwise form a part of server 102. For example, server 102 may include one or more rack mount and/or blade servers which include or are otherwise integral with SSD array 103. In such embodiments one or more of the SSD's in SSD array 103 may be communicatively coupled to server 102, e.g., to a motherboard and/or expansion board thereof.

Client 101, server 102, and solid state drive array 103 may be in wired or wireless communication with one another, e.g., either directly or through optional network 104 (shown in hashes). Without limitation, client 101 and server 102 in some embodiments communicate with one another via network 104, and server 102 and SSD array 103 communicate with one directly or through network 104. In any case, network 104 may be any network that carries data. Non-limiting examples of suitable networks that may be used as network 104 include short and long range communications networks as defined above, combinations thereof, and the like. In some embodiments, network 104 is a short range communications network such as a BLUETOOTH® network, a zig bee network, a near field communications (NFC) link, a wired (e.g., Ethernet) connection, combinations thereof, and the like. In other embodiments, network 104 is a long range communications network such as a Wi-Fi network, a cellular (e.g., 3G, 4G, etc.) network, a wide area network such as the Internet, combinations thereof and the like.

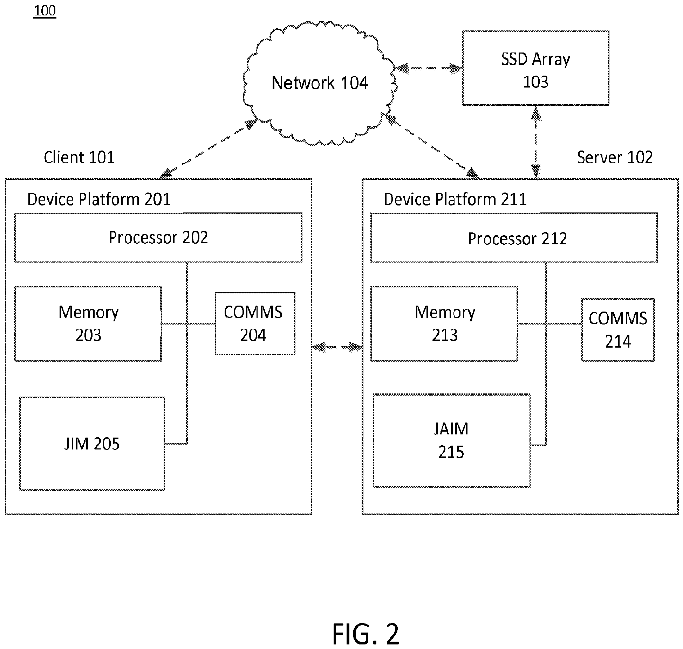

Reference is now made to FIG. 2, which depicts a block diagram including more details of system 100 for accelerating compute intensive operations. As shown, client 101 includes client device platform 201, which may be any suitable device platform. Without limitation it is preferred that client device platform 201 correlate to the type of electronic device used as client 101. Thus for example where client 101 is a cellular phone, smart phone, desktop computer, laptop computer, etc., client device platform 201 in some embodiments is a cellular phone platform, smart phone platform, desktop computer platform, laptop computer platform, etc. respectively.

Regardless of its nature, device platform 201 may include processor 202, memory 203, and communications resources (COMMS) 204. Processor 202 may be any suitable general purpose processor or application specific integrated circuit, and may be capable of executing one or multiple threads on one or multiple processor cores. Without limitation, processor 202 is in some embodiments a general purpose processor, such as but not limited to the general purpose processors commercially available from INTEL® Corp., ADVANCED MICRO DEVICES®, ARM®, NVIDIA®, APPLE®, and SAMSUNG®. While FIG. 2 illustrates client 101 as including a single processor, multiple processors may be used.

Memory 203 may be any suitable type of computer readable memory. Exemplary memory types that may be used as memory 203 include but are not limited to: programmable memory, non-volatile memory, read only memory, electrically programmable memory, random access memory, flash memory (which may include, for example NAND or NOR type memory structures), magnetic disk memory, optical disk memory, phase change memory, memristor memory technology, spin torque transfer memory, combinations thereof, and the like. Additionally or alternatively, memory 203 may include other and/or later-developed types of computer-readable memory.

COMMS 204 may include hardware (i.e., circuitry), software, or a combination of hardware and software that is configured to allow client 101 to at least transmit and receive messages to/from server 102 or, more particularly COMMs 214 of server device platform 211, as discussed below. Communication between COMMS 204 and COMMS 214 may occur over a wired or wireless connection using a close and/or long range communications network as described generally above. COMMS 204 may therefore include hardware to support such communication, e.g., one or more transponders, antennas, BLUETOOTH™ chips, personal area network chips, near field communication chips, wired and/or wireless network interface circuitry, combinations thereof, and the like.

Client device platform 201 further includes a job interface module (JIM) 205. As will be described in detail later, JIM 205 may be configured to batch and/or send (compute intensive) jobs to server 102 for execution. In any case, JIM 205 may be in the form of hardware, software, or a combination of hardware and software which is configured to cause client 101 to perform job request operations consistent with the present disclosure. In some embodiments, JIM 205 may be in the form of computer readable instructions (e.g. stored on memory 203) which when executed by processor 202 causes the performance of job request operations consistent with the present disclosure. Alternatively or additionally, in some embodiment JIM 205 may include or be in the form of logic that is implemented at least in part in hardware to perform one or more client functions consistent with the present disclosure.

As further shown in FIG. 2, server 102 includes server device platform 211. Like client device platform 201, server device platform 211 may be any suitable device platform. Without limitation it is preferred that server device platform 211 correlate to the type of electronic device used as server 102. Thus for example where server 102 is a rack mount server platform, a blade server platform, a desktop computer platform, etc., server device platform 211 is in some embodiments a rack mount server platform, a blade server platform, a desktop computer platform, etc., respectively. Server device platform 211 further includes a processor 212, memory 213, and COMMS 214. The nature and function of such components is the same as the corresponding parts of client device platform 201, and therefore is not described again for the sake of brevity.

In addition to the foregoing components device platform 211 includes job acceleration interface module (JAIM) 215. As will be described in detail below, JAIM may generally be configured to receive (compute intensive) jobs from client 101, and to convey such jobs to one or more SSDs of SSD array 103 for execution. JAIM is configured to receive and/or retrieve the output produced by SSD array 103, and to communicate the output to client 101. In this way, JAIM 215 exposes the hardware acceleration engine of an SSD to server 102, and therefore allows server 102 to leverage such hardware to perform compute intensive operations.

Like JIM 205, JAIM 215 may be in the form of hardware, software, or a combination of hardware and software which is configured to cause server 102 to perform job acceleration interface operations consistent with the present disclosure. Such operations include, as claimed, receiving a job request and/or data from client 101, producing one or more job execution commands, transmitting the job execution command(s) to SSD array 103, requesting in some embodiments) the output produced by SSD array (or an SSD thereof), and transmitting the output to client 101, as discussed below. In some embodiments, JAIM 215 may be in the form of computer readable instructions (e.g. stored on memory 213) which when executed by processor 212 causes the performance of job acceleration interface operations consistent with the present disclosure. Alternatively or in addition, JAIM 215 in some embodiments may include or be in the form of logic that is implemented at least in part in hardware to perform one or more server functions consistent with the present disclosure.

In some embodiments JAIM 215 may be configured to communicate with SSD array 103 in accordance with an established communication protocol, such as past, present or future developed versions of the serial advanced technology attachment (SATA) protocol, the non-volatile memory express (NVMe) protocol, the serial attached small computer systems interface (SAS) protocol combinations thereof, and the like. Such protocols have options to define vendor specific commands which can be used to describe and/or implement the commands described herein as being issued by JAIM 215, e.g., the job execution commands not above. It should therefore be understood that the commands issued by JAIM 215 may be vendor specific commands that comply with one or more of the aforementioned protocols.

As noted above, SDD array 103 may include one or more solid state drives. This concept is illustrated in FIG. 3, which is a block diagram showing further details of a server and a solid state drive array consistent with various embodiments of the present disclosure. As shown in FIG. 3, SSD array 103 may be configured to include a SSD 301_{1...n}, wherein n is 0 (indicating that only a single SSD is used) or is an integer greater than or equal to 2. Consistent with the foregoing, n may range from 2 to about 5, from 2 to about 10, from 2 to about 50, from 2 to about 100, from 2 to about 1000, etc. Without limitation, SSD array 103, as claimed, in some embodiments includes 2 or more SSDs.

SSDs 301₁, 301ₙ each include a controller 302, 302'. As further shown in FIG. 3, each controller 301₁, 301ₙ includes a hardware acceleration engine (HAE) 303, 303'. In general, HAE 303, 303' may be configured to perform accelerated operations on data, also referred to herein as data. More specifically, HAE 303, 303' may be configured to perform accelerated compute intensive operations on data/data that is stored on SSD 301, 301' (e.g., in non-volatile memory (NVM) 304, 304'), and/or which may be received from server 102. In some embodiments, HAE 303, 303' is configured in the form of a field programmable gate array (FPGA), an application specific integrated circuit, an encryption/decryption acceleration engine, a compression/decompression engine, an encode/decode engine (CODEC) combinations thereof, and the like, any or all of which may include an interface in the form of hardware, software, or a combination thereof. Without limitation, HAE 303, 303' is in some embodiments in the form of a hardware encryption/decryption engine. Non-limiting examples of suitable hardware encryption/decryption engines include the hardware encryption engines available in certain SSDs sold by INTEL® Corporation, such as but not limited to the INTEL® P3700 series SSD. In some embodiments, as claimed, HAW 303, 303' is a hardware encryption/decryption engine that is configured to accelerate execution of one or more encryption algorithms (e.g., the AES algorithm specified by FIPS 197) on a data.

As will be described in detail later, controller 302 may receive a job execution command associated with data/data from JAIM 215, e.g., via wired or wireless communication. In response to the job execution command, controller 302 may forward the data to HAE 303 for processing in accordance with the job request. HAE 303 processes the data in the manner specified by the job execution command, e.g., by performing accelerated compute intensive operations on the data. Depending on the configuration of SSD 301₁, 301ₙ and/or on the configuration of the received job execution command, the output produced by HAE may be communicated to server 102, e.g., in a flow through manner. That is, in some embodiments the output may be forwarded to server 102 without the need for server 102 to request the output.

Alternatively or additionally, in some embodiments the output of HAE 303, 303' may be stored in a memory of SSD 301₁, 301ₙ, such as NVM 304, 304' or optional transfer buffer 305, 305'. Optional transfer buffer 305, 305' may be any suitable transfer buffer, and in some embodiments includes or is in the form of volatile memory such as dynamic random access memory (DRAM) or static random access memory or SRAM.

Without limitation, in some embodiments SSD 301₁, 301ₙ includes optional transfer buffer 305, 305', and the job execution command received from JAIM 215 is configured to cause controller 302, 302' (or, more particularly, HAE 303, 303') to store its output in transfer buffer 305. In such instances, JAIM 215 may be further configured to cause server 102 to issue an output request message (e.g., a read buffer command) to SSD 301₁, 301ₙ, causing SSD array 103 to provide the output of HAE 303, 303' to server 102.

For the sake of illustration the present disclosure will now proceed to describe an example embodiment in which the system illustrated in FIGS. 1-3 is used to perform accelerated encryption operations. In this regard is it noted that client 101 and/or an operator thereof may wish to encrypt a data set (data) with an encryption algorithm such as the advanced encryption standard. In this regard, JIM 205 may be configured to cause COMMS 204 of client 101 to transmit a first signal to COMMS 214 of server 102. In some embodiments the first signal may include a job acceleration request. Among other things, the job acceleration request may specify parameters of the job to be accelerated.

Non-limiting example of such parameters include the size of the data, the operations to be performed on the data (in this case, encryption, though other compute intensive operations are envisioned)), the type of encryption to be employed (e.g., AES encryption, SMS4 encryption, etc.), one or more keys that are to be used in the encryption, combinations thereof, and the like. Of course the foregoing list is for the sake of example, and it should be understood that the operations to be accelerated may depend on the encryption algorithm under consideration. In some embodiments, the first signal may also include one or more keys and/or specify one or more algorithms that are to be used in the processing of the data. For example where the data is to be encrypted using a single key encryption protocol, the first signal may include the key that is to be used by the HAE to encrypt the data. Alternatively or additionally, each of SSDs 301₁, 301ₙ may have been pre-provisioned with a key that is to be used to encrypt the data.

The first signal may also include information regarding client 101. For example, the first signal may include client authentication information that may be used by server 102 to verify the authenticity of client 101. Non-limiting examples of suitable client identification information include an identifier of client 101, one or more passwords, one or more keys (e.g., client 101's enhanced privacy identifier (EPID)), one or more hashes, combinations thereof, or the like. These are of course for the sake of example only, and any suitable information may be included in the first signal as client authentication information, so long as it may enable server 102 to verify the authenticity of client 101. In this regard, server 102 may verify the authenticity of client 101 via any suitable authentication protocol.

Once the authenticity of the client has been verified or if such verification is not required JAIM 215 may cause server 102 to transmit a second signal to client 101, e.g., using COMMS 214. In some embodiments the second signal may acknowledge the first signal and cause client 101 to transmit the data to server 102, either directly or via network 104.

At this point JAIM 215 may await receipt of the entire data from client 101 before beginning the job, or it may begin the job while the data is being received, e.g., as it is inflight or streaming to server 102. In any case, JAIM 215 may initiate performance of the job (in this case, encryption of the data), by transmitting a third signal to SSD array 1003. The third signal may include a job execution command detailing the operations to be performed on the data, as well as the data to be processed by one or more of the SSDs in SSD array 103. In this case, which falls within the scope of the appended claims, the third signal includes a job execution command that specifies the type of encryption operations to be performed, as well as a description of the data on which encryption is to be performed. As noted above, the job execution command may be in the form of a vendor specific command in accordance with one or more previous, current, or future developed versions of the SATA, NVMe, and/or SAS protocols.

In response to the job execution command the controllers of the SSDs in SSD array 103 are configured to transmit all or a portion of the data they receive to a hardware acceleration engine (e.g., HAE 303, 303') for processing. For example HAE 303 processes the received data in a manner consistent with the operations specified in the job execution command received from server 102 or, more specifically, from the commands produced by controller 302 in response to the job execution command received from server 102. In this example, HAE 303 is a hardware encryption engine, such as may be employed in various commercially available SSD's. Thus, where the data received by an SSD is to be encrypted (e.g., using the advanced encryption standard or another suitable encryption algorithm) controller 302, 302' supplies all or a portion of the data to HAE 303, 303'. In response, HAE 303, 303' may perform hardware accelerated encryption on the data to produce an output. Like the job execution command, the commands issued by the controllers in the SSDs of SSD array 103 may be in the form of vendor specific commands, e.g., in accordance with one or more prior, current, or future developed version of the SATA, NVM, and/or SAS protocols.

In some embodiments JAIM 215 may cause server 102 to produce a job execution command that includes, is associated with, or is in the form of a (optionally vendor specific) read/write command issued to a controller (e.g., controller 302, 302') of an SSD (e.g., SSD 301₁, 303ₙ) of SSD array 103. In such instance the job execution command may cause the controller to instigate performance of the requested operations by a hardware acceleration engine (e.g., HAE 303, 303'), in addition to reading and/or writing the data and/or the output to non-volatile memory. That is in response to the job execution command, the output of HAE 303, 303' may, in non claimed examples, be written to non-volatile memory of the SDD (e.g., NVM 304, 304'). Alternatively or additionally, the output is written to a buffer (e.g., optional buffer 305, 305') of the SSD. In either case, once the output is written controller 302 may transmit a signal to server 102 signifying that execution of the job is complete. In response to such a signal, JAIM 215 may cause server 102 to request transmission of the output from controller 302. Thus for example, JAIM 215 may cause server 102 to issue a request output command to an appropriate SSD of SSD array 103. The request output command may be configured to cause the controller of the SSD to read the output of the operations performed by a hardware acceleration engine, and to transmit that output to server 102. Like the job execution command, the request output command may be a vendor specific command in accordance with one or more SAT, NVMe, and/or SAS protocols. Server 102 may then communicate the output to client 101, e.g., via wired or wireless communication.

More generally, in some embodiments JAIM 215 may configure the job execution command as part of a read/write command that causes controller of an SSD to transmit data received in association with a job to a hardware acceleration engine for processing. In response to the job execution command, the hardware acceleration engine performs compute intensive operations on the data, e.g., (as claimed) encryption, decryption, and produce an output which is stored in a memory of the SSD, such as non-volatile memory (non claimed example), a buffer/cache, or, as non claimed examples, combinations thereof, and the like. Without limitation, the job execution command is in some embodiments configured to cause the SSD controller to store the output produced by a hardware acceleration engine in a buffer of the SSD. In either case, JAIM 215 may cause server 102 to issue a request output command to an appropriate SSD of SSD array 103. The request output command may include or be in the form of a read command (e.g., a read non-volatile memory command, a read buffer command, combinations thereof, and the like) that causes the controller of the SSD to read the output stored in non-volatile memory and/or a buffer/cache of the SSD, and provide the read output to server 102. JAIM 215 may then cause server 102 to communicate the job output to client 101.

In other non-limiting embodiments, JAIM 215 may cause server 102 to produce a job execution command that is not associated with a read/write command. Like the previous embodiments, the job execution command may be configured to cause controller a controller of an SSD to transmit data received in association with a job to a hardware acceleration engine for processing. Unlike the previous embodiments, however, the job execution command may not cause the controller to store the output of the hardware acceleration engine in a buffer or non-volatile memory. Rather, the job execution command may cause the controller to automatically convey the output of the hardware acceleration engine to the server or, more particularly, to JAIM 215, without storing the output in non-volatile memory. That is, unlike the previous embodiments server 102 (or, more particularly, JAIM 215) need not request the output from the hardware acceleration engine. Rather, each SSD may automatically provide the output from the hardware acceleration engine to server 102 (or, more particularly, to JAIM 215). In such embodiments it may be understood that the SSDs in SSD array 103 may act purely as accelerators for the compute intensive operations associated with the job execution command, with data/data being input to and output from one or more SSDs in the array in a flow through manner. In response to receiving the output, server 102 may then communicate the output to client 101, e.g., via wired or wireless communication.

It is noted that for the sake of example and illustration, FIG. 3 depicts an embodiment in which hardware acceleration engine 303, 303' is integral with the controller (e.g., controller 302, 302'). It should be understood that such illustration is for the sake of example only, and that HAE 303, 303' need not be integral with controller 302, 302', respectively. Indeed, the present disclosure envisions embodiments in which a hardware acceleration engine is formed as a separate component that is internal to an SSD, as well as embodiments in which a hardware acceleration engine is external to an SSD to but is ultimately controlled by an SSD controller.

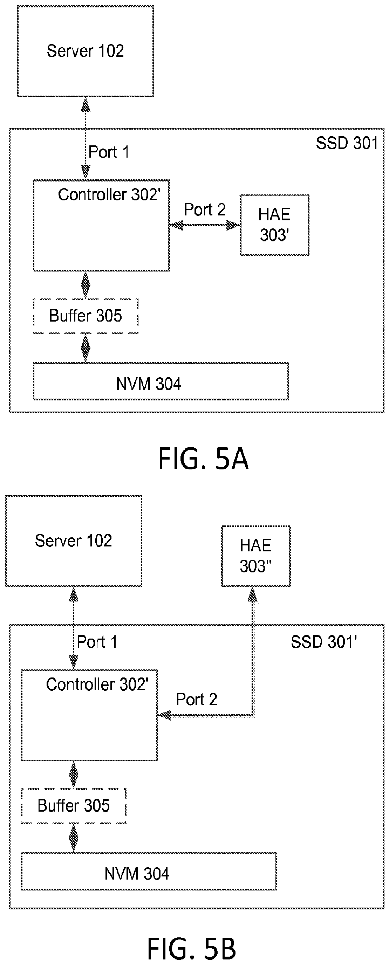

For example in some embodiments controller 302, 302' may be in the form of a multiport controller such as a dual port controller. In such embodiments a first port of the controller may be communicatively coupled to server 102, e.g., via an appropriate interface such as a cable interface. Another (e.g., second) port of the controller may be communicatively coupled to the hardware acceleration engine, which as noted above may be separate from the controller, and either separate from or internal to the SSD. These concepts are illustrated in FIGS. 5A and B. Specifically, FIG. 5A depicts an example embodiment in which SSD 301 includes a dual port controller 302', wherein a first port of controller 302' is coupled to server 102, and a second port of controller 302' is coupled to a hardware acceleration engine 303' that is separate from controller 302', but which it integral with SSD 301. SSD 301' in FIG. 5B includes similar elements, except that the second port of controller 302' is coupled to a hardware acceleration engine 303" that is external to SSD 301'. It should be understood that in FIGS. 5A and 5B, SSDs 301 and 301' may be used in the same manner as SSDs 301_{1...n} in FIG. 3. It should also be understood that the depiction of SSDs 301 and 301' in FIGS. 5A and B as being separate from server 102 is for the sake of example, and that such SSDs may be integral with or otherwise incorporated within server 102. Finally, it should be understood that HAEs 303' and 303" may be used in the same manner as HAE 303 in FIG. 3, and that HAE 303" may in some embodiments be integral with or otherwise incorporated within server 102.

The operation of the embodiments of FIGS. 5A and 5B is the same as previously described above in connection with FIGS 1-3, except for the relative location of the hardware acceleration engine. As may be appreciated such embodiments may provide certain advantages relative to the embodiments shown in FIG. 3, i.e., in which a hardware acceleration engine is integral to the SSD controller. Specifically, the embodiments of FIG. 3 may entail significant upfront design and validation efforts to ensure that the accelerator is working correctly in conjunction with the controller. With this in mind, the alternatively approaches noted above can avoid such issues, and provide another pathway in instances where integrating the accelerator with the controller is difficult or not an option.

For ease of understanding the foregoing embodiment was described in the context of a solid state drive array that includes one or relatively few SSDs. It should be noted that such description is for the sake of example only, and that the technologies described herein may be batched and/or scaled between multiple SSDs. Indeed depending on the operations to be performed, the size of the data, and/or other factors, the third signal may be configured to cause SSD array 103 to process the data with one or a plurality of the SSDs therein. For example where the size of the data is relatively small or the operations to be performed on the data are relatively simple, JAIM 215 may configure the third signal to cause SSD array 103 to process the entire data with a single SSD. Alternatively where the data is relatively large and/or even faster performance of the operations on the data is desired, JAIM 215 may configure the third signal to cause SSD array 103 to subdivide the data amongst a plurality of SSDs, such that each SSD operates on a portion of the data.

For example in some embodiments and as shown in FIG. 3, SSD array 103 includes a plurality of SSDs, including at least a first solid state drive (e.g., SSD 3011) and a second solid state drive (3011). In such embodiments and as shown in FIG. 3, the first solid state drive includes a first controller, a first hardware acceleration engine, and first nonvolatile memory, and the second solid state drive comprises a second controller, a second hardware acceleration engine, and a second non- volatile memory.

With this in mind, JAIM 215 of server 102 is configured to transmit a first job acceleration command and a first portion of said data to the first solid state drive, and a second job acceleration command and a second portion of the data to the second solid state drive. The first job acceleration command is configured to cause the first controller to transmit the first portion of said data to the first hardware acceleration engine for execution of first accelerated operations on the first portion of said data, e.g., as generally discussed above. For example, the first hardware acceleration engine may execute first accelerated operations on the first portion of the data without storing an output of the first accelerated operations in the first non- volatile memory. Likewise, the second job acceleration command is configured to cause the second controller to transmit the second portion of said data to the second hardware acceleration engine for execution of second accelerated operations on the second portion of the data, e.g., as generally described above. In some embodiments, the second hardware acceleration engine may perform the second accelerated operations without storing an output of the second accelerated operations in the second non-volatile memory. In such embodiments, the first job acceleration command is further configured to cause the first solid state drive to transmit the output of the accelerated operations performed on the first portion of the data to said JAIM, and the second job acceleration command is further configured to cause the second solid state drive to transmit the output of the accelerated operations performed on the second portion of the data to said JAIM.

As noted above the first and second hardware acceleration engines of the first and second solid state drives may perform the first and second accelerated operations without storing their respective output to non-volatile memory of an SSD. Alternatively, the first and second solid state drives may each include a first transfer buffer and a second transfer buffer, respectively. In such embodiments, the first and second hardware acceleration engines may store the output of the first and second operations in the first and second transfer buffers, respectively. JAIM 215 may then cause server 102 to issue one or more request output commands that cause the first and second solid state drives to provide the output in the first and second transfer buffers, respectively, to server 102 or, in instances where the solid state drives are integral with server 102, to other components of server 102. In any case, in response to a request output command the SSD's may provide the output from their respective transfer buffers to server 102 via any suitable interface. For example where an SSD is not integral with server 102, it may communicate the output via a suitable communications interface, such as via a long range communications network, a short range communications network, combinations thereof and the like. In instances where an SSD is integral with server 102, it may communicate the output via a communications protocol such as the Serial Advanced Technology Attachment (SATA) protocol, the peripheral component interconnect (PCI) protocol, the PCI express protocol

From the foregoing one of ordinary skill in the art will appreciate that the technologies described herein may employ a large numbers of SSD's to process compute intensive operations on a data. That is, it may be understood that performance of the compute intensive operations may be scaled up or down by batching jobs to greater or fewer SSD's, as desired.

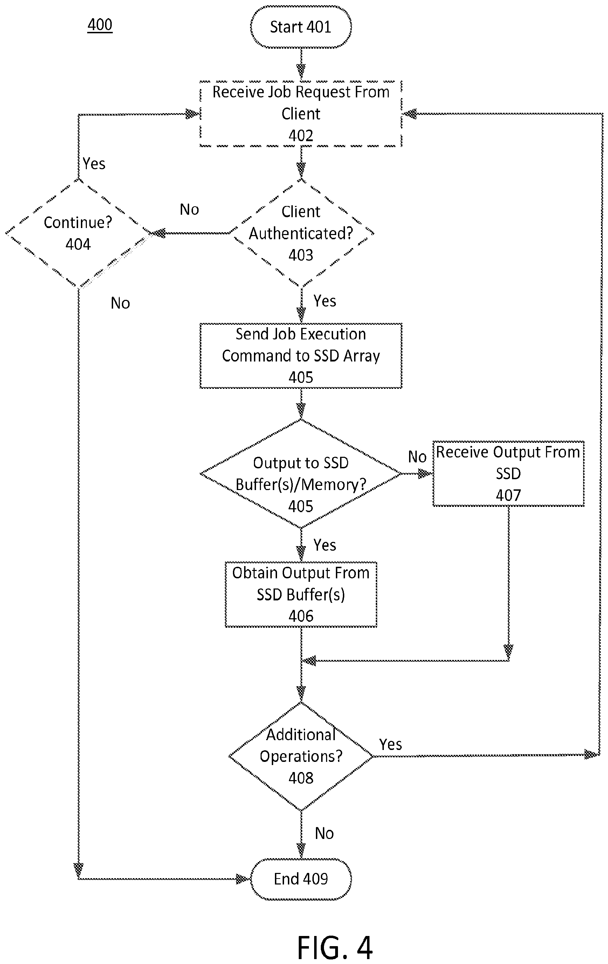

Another aspect of the present disclosure relates to methods for accelerating compute intensive operations. In this regard reference is made to FIG. 4, which is a flow diagram of example operations of one embodiment of a method of accelerating compute intensive operations consistent with the present disclosure. As shown the method begins at block 401. The method may then proceed to optional block 402, wherein a server may receive a job request from a client. Block 402 is illustrated with hashing to show its optional nature, as in some embodiments it is envisioned that the server itself may be the source of a job request. That is, in some embodiments a server may include a job interface module (e.g., such as JIM 205), which is configured to produce a first signal containing a job acceleration request.

The method may then proceed to optional block 403, wherein a determination may be made as to whether the client (or other entity producing the job acceleration request) is authenticated, e.g., as generally discussed above. If not, the method may proceed to optional block 404, wherein a determination may be made as to whether the method is to continue. If not, the method may proceed to block 409 and end. If so, the method may loop back to block 402 and continue.

If the client is authenticated pursuant to block 403 or if the operations of blocks 402 and/or 403 are not required, the method may proceed to block 405, wherein a job execution command may be produced and sent to an SSD array, e.g., in the manner generally discussed above. As previously discussed the job execution command causes a controller of an SSD in the SSD array to send data associated with the command to a hardware acceleration engine for processing.

The method may then proceed to block 405, whereupon a determination may be made as to whether the hardware acceleration engine of an SSD in the SSD array is to produce an output that is stored in a buffer or memory of that SSD. As discussed previously, the output of the hardware acceleration engine of an SSD may be stored to a buffer and/or, in a non claimed example, non- volatile memory of the SSD, e.g., in response to the job execution command (e.g., where the job execution command is included in, in the form of, or associated with a read/write command issued to the SSD controller).

If the output is to be stored in a buffer or memory, the method may proceed to block 406, wherein the output may be obtained from the SSD buffer and/or (in a non claimed example, non-volatile) memory, as appropriate. As discussed above this may be accomplished, for example, by the issuance of a read command (e.g., a read memory or read buffer command) issued by a server to a controller of the SSD. However if the output is not to be stored in a buffer or memory of an SSD the method may proceed to block 407, wherein the output may be received from the SSD automatically. That is pursuant to block 407, the party issuing the job execution command may automatically receive the output of the hardware acceleration engine of the SSD(s) in the SSD array, e.g., without the need to issue an additional command requesting the output.

In any case the method may then proceed to block 408, wherein a determination may be made as to whether there are additional compute intensive operations that are to be accelerated. If so, the method may loop back to block 402. If not, the method may proceed to block 409 and end.

## Claims

1. A method for accelerating compute intensive operations, comprising:
generating, via a first circuitry (215, 212) of a server (102), respective job execution commands, in response to receiving input data communicated by a computing device, the input data being at least a portion of data on which the computing device requires encryption or decryption operations to be performed;
transmitting, via the first circuitry (215,212), respective portions of the input data and the respective job execution commands to a plurality of solid state drives (301₁...301ₙ), wherein each job execution command is configured to specify the type of encryption or decryption operations to be performed on an associated portion of the input data, and a description of the associated portion of the input data on which the encryption or decryption operations are to be performed;
transmitting, via a controller (302) of an associated solid state drive (301₁...301ₙ), in response to receiving the associated job execution command from the first circuitry (215,212), the associated portion of the input data to a hardware acceleration engine (303) of the said solid state drive (301₁...301ₙ), the hardware acceleration engine adapted to accelerate execution, via hardware, of at least one encryption or decryption algorithm on the input data, the hardware acceleration engine configured to perform the encryption or decryption operations at a higher processing speed compared to the computing device;
performing, by the hardware acceleration engine (303), at least encryption or decryption operations on the associated portion of the input data, which is stored in a non-volatile memory of the said solid state drive (301₁...301ₙ);
executing, by the hardware acceleration engine (303), the encryption or decryption operations on the associated portion of the input data to generate associated output data, wherein the generated associated output data is not stored in the non-volatile memory of said solid state drive (301₁...301ₙ);
providing, by the controller (302), said generated associated output data to said server (102) via said first circuitry (215,212); and
providing, by the server (102), said generated associated output data to the computing device.

2. The method of claim 1, wherein said solid state drive (301₁...301ₙ) further comprises a transfer buffer, and the method further comprises, with said controller (302):
causing said hardware acceleration engine (303) to store said associated output data in said transfer buffer; and
providing said associated output data to said server (102) in response to receipt of a request output message from said server (102).

3. The method of claim 1, further comprising, with said controller (302):
causing said hardware acceleration engine (303) to perform the encryption or decryption operations in accordance with parameters of a job to be accelerated, the job associated with the input data.

4. The method of claim 3, wherein said parameters include at least one of the following: a size of the input data, and one or more operations to be performed on the input data.

5. The method of any preceding claim, wherein the plurality of solid state drives (301₁...301ₙ) are included in a solid state drive array (103) that is remote from the server (102).

6. The method of claim 5 when dependent on claim 3, further comprising subdividing, by said first circuitry (215,212), execution of the encryption or decryption operations between respective hardware acceleration engines (303) of the plurality of solid state drives (301₁...301ₙ) based at least on said parameters.

7. The method of any one of claims 1 to 4, wherein the solid state drives (301₁... 301ₙ) are integral with the server (102).

8. The method of claim 1, further comprising automatically providing said associated output data to said server (102).

9. The method of any preceding claims, wherein the first circuitry includes a job acceleration interface circuitry.

10. A system comprising means adapted to perform the steps of the method of any one of claims 1 to 9.

11. At least one computer readable medium comprising computer readable instructions which when executed by respective controllers (302) of respective solid state drives (301₁...301ₙ) result in the performance of the method of any one of claims 1 to 9.

## Patentansprüche

1. Verfahren zur Beschleunigung von rechenintensiven Operationen, umfassend:
Erzeugen von jeweiligen Aufgabenausführungsbefehlen mittels einer ersten Schaltungsanordnung (215, 212) eines Servers (102) in Reaktion auf ein Empfangen von Eingabedaten, die von einer Computervorrichtung kommuniziert werden, wobei es sich bei den Eingabedaten wenigstens um einen Teil von Daten handelt, für welchen die Computervorrichtung Durchführung von Verschlüsselungs- oder Entschlüsselungsoperationen anfordert;
Senden von jeweiligen Teilen der Eingabedaten und der jeweiligen Aufgabenausführungsbefehle mittels der ersten Schaltungsanordnung (215, 212) an eine Mehrzahl von Festkörperlaufwerken (301₁...301ₙ), wobei jeder Aufgabenausführungsbefehl so konfiguriert ist, dass er den Typ von Verschlüsselungs- oder Entschlüsselungsoperationen, der an einem assoziierten Teil der Eingabedaten durchgeführt werden soll, und eine Beschreibung des assoziierten Teils der Eingabedaten spezifiziert, an welchem die Verschlüsselungs- oder Entschlüsselungsoperationen durchgeführt werden sollen;
Senden des assoziierten Teils der Eingabedaten mittels einer Steuerung (302) eines assoziierten Festkörperlaufwerks (301₁...301ₙ) in Reaktion auf den assoziierten Aufgabenausführungsbefehl von der ersten Schaltungsanordnung (215, 212) an eine Hardwarebeschleunigungsmaschine (303) des Festkörperlaufwerks (301₁...301ₙ), wobei die Hardwarebeschleunigungsmaschine zum Beschleunigen von Ausführung mindestens eines Verschlüsselungs- oder Entschlüsselungsalgorithmus an den Eingabedaten mittels Hardware konfiguriert ist, und die Hardwarebeschleunigungsmaschine zum Durchführen der Verschlüsselungs- oder Entschlüsselungsoperationen bei einer höheren Verarbeitungsgeschwindigkeit als die Computervorrichtung konfiguriert ist;
Durchführen wenigstens von Verschlüsselungs- oder Entschlüsselungsoperationen am assoziierten Teil der Eingabedaten, die in einem nichtflüchtigen Speicher des Festkörperlaufwerks (301₁...301ₙ) gespeichert werden, durch die Hardwarebeschleunigungsmaschine (303);
Ausführen der Verschlüsselungs- oder Entschlüsselungsoperationen am assoziierten Teil der Eingabedaten durch die Hardwarebeschleunigungsmaschine (303), um assoziierte Ausgabedaten zu erzeugen, wobei die erzeugten assoziierten Ausgabedaten nicht im nichtflüchtigen Speicher des Festkörperlaufwerks (301₁...301ₙ) gespeichert werden;
Bereitstellen der erzeugten assoziierten Ausgabedaten durch die Steuerung (302) für den Server (102) mittels der ersten Schaltungsanordnung (215, 212); und
Bereitstellen der erzeugten assoziierten Ausgabedaten durch den Server (102) für die Computervorrichtung.

2. Verfahren nach Anspruch 1, wobei das Festkörperlaufwerk (301₁...301ₙ) ferner einen Transferpuffer umfasst, und das Verfahren mit der Steuerung (302) ferner umfasst:
Veranlassen der Hardwarebeschleunigungsmaschine (303) zum Speichern der assoziierten Ausgabedaten im Transferpuffer; und
Bereitstellen der assoziierten Ausgabedaten für den Server (102) in Reaktion auf ein Empfangen einer Anforderungsausgabenachricht vom Server (102).

3. Verfahren nach Anspruch 1, ferner umfassend mit der Steuerung (302):
Veranlassen der Hardwarebeschleunigungsmaschine (303) zum Durchführen der Verschlüsselungs- oder Entschlüsselungsoperationen gemäß Parametern einer Aufgabe, die beschleunigt werden soll, wobei die Aufgabe mit den Eingabedaten assoziiert ist.

4. Verfahren nach Anspruch 3, wobei die Parameter mindestens eine von Folgenden umfassen: eine Größe der Eingabedaten und eine oder mehrere Operationen, die an den Eingabedaten durchgeführt werden sollen.

5. Verfahren nach einem der vorhergehenden Ansprüche, wobei die Mehrzahl von Festkörperlaufwerken (301₁...301ₙ) in einer Anordnung (103) von Festkörperlaufwerken umfasst ist, die vom Server (102) entfernt ist.

6. Verfahren nach Anspruch 5, wenn von Anspruch 3 abhängig, umfassend ein Aufteilen der Ausführung der Verschlüsselungs- oder Entschlüsselungsoperationen durch die erste Schaltungsanordnung (215, 212) zwischen jeweiligen Hardwarebeschleunigungsmaschinen (303) der Mehrzahl von Festkörperlaufwerken (301₁...301ₙ) wenigstens basierend auf den Parametern.

7. Verfahren nach einem der Ansprüche 1 bis 4, wobei die Festkörperlaufwerke (301₁...301ₙ) in den Server (102) integriert sind.

8. Verfahren nach Anspruch 1, ferner umfassend ein automatisches Bereitstellen der assoziierten Ausgabedaten für den Server (102).

9. Verfahren nach einem der vorhergehenden Ansprüche, wobei die erste Schaltungsanordnung eine Schnittstellenschaltungsanordnung zur Aufgabenbeschleunigung umfasst.

10. System, umfassend Mittel, die zum Ausführen der Schritte des Verfahrens nach Anspruch 1 bis 9 ausgelegt sind.

11. Mindestens ein computerlesbares Medium, das computerlesbare Anweisungen umfasst, die bei Ausführung durch jeweilige Steuerungen (302) von jeweiligen Festkörperlaufwerken (301₁...301ₙ) zur Durchführung des Verfahrens nach einem der Ansprüche 1 bis 9 führen.

## Revendications

1. Procédé d'accélération d'opérations exigeantes en calculs, comprenant :
la génération, par le biais d'une première circuiterie (215, 212) d'un serveur (102), de commandes d'exécution de travail respectives, en réponse à la réception de données d'entrée communiquées par un dispositif informatique, les données d'entrée consistant au moins en une partie de données sur laquelle le dispositif informatique nécessite la réalisation d'opérations de chiffrement ou de déchiffrement ;
la transmission, par le biais de la première circuiterie (215, 212), de parties respectives des données d'entrée et des commandes d'exécution de travail respectives à une pluralité de disques statiques à semi-conducteurs (301₁...301ₙ), chaque commande d'exécution de travail étant configurée pour stipuler le type d'opérations de chiffrement ou de déchiffrement à réaliser sur une partie associée des données d'entrée, et une description de la partie associée des données d'entrée sur laquelle les opérations de chiffrement ou de déchiffrement sont à réaliser ;
la transmission, par le biais d'un contrôleur (302) d'un disque statique à semi-conducteurs (301₁...301ₙ) associé, en réponse à la réception de la commande d'exécution de travail associée depuis la première circuiterie (215, 212), de la partie associée des données d'entrée à un moteur d'accélération de matériel (303) dudit disque statique à semi-conducteurs (301₁...301ₙ), le moteur d'accélération de matériel étant adapté à accélérer l'exécution, par le biais d'un matériel, d'au moins un algorithme de chiffrement ou de déchiffrement sur les données d'entrée, le moteur d'accélération de matériel étant configuré pour réaliser les opérations de chiffrement ou de déchiffrement à une vitesse de traitement plus élevée que celle du dispositif informatique ;
la réalisation, par le moteur d'accélération de matériel (303), au moins d'opérations de chiffrement ou de déchiffrement sur la partie associée des données d'entrée, laquelle est enregistrée dans une mémoire non volatile dudit disque statique à semi-conducteurs (301₁...301ₙ) ;
l'exécution, par le moteur d'accélération de matériel (303), des opérations de chiffrement ou de déchiffrement sur la partie associée des données d'entrée afin de générer des données de sortie associées, les données de sortie associées générées n'étant pas enregistrées dans la mémoire non volatile dudit disque statique à semi-conducteurs (301₁...301ₙ) ;
la fourniture, par le contrôleur (302), desdites données de sortie associées générées audit serveur (102) par le biais de ladite première circuiterie (215, 212) ; et
la fourniture, par le serveur (102), desdites données de sortie associées générées au dispositif informatique.

2. Procédé selon la revendication 1, dans lequel ledit disque statique à semi-conducteurs (301₁...301ₙ) comprend en outre un tampon de transfert, et lequel procédé comprend en outre, au moyen dudit contrôleur (302) :
la commande audit moteur d'accélération de matériel (303) d'enregistrer lesdites données de sortie associées dans ledit tampon de transfert ; et
la fourniture desdites données de sortie associées audit serveur (102) en réponse à la réception d'un message de sortie de requête depuis ledit serveur (102).

3. Procédé selon la revendication 1, comprenant en outre, au moyen dudit contrôleur (302) :
la commande audit moteur d'accélération de matériel (303) de réaliser les opérations de chiffrement ou de déchiffrement conformément à des paramètres d'un travail à accélérer, le travail étant associé aux données d'entrée.

4. Procédé selon la revendication 3, dans lequel lesdits paramètres comportent : une taille des données d'entrée et/ou une ou plusieurs opérations à réaliser sur les données d'entrée.

5. Procédé selon l'une quelconque des revendications précédentes, dans lequel la pluralité de disques statiques à semi-conducteurs (301₁...301ₙ) sont inclus dans une matrice (103) de disques statiques à semi-conducteurs qui est distante du serveur (102).

6. Procédé selon la revendication 5 lorsqu'elle dépend de la revendication 3, comprenant en outre la subdivision, par ladite première circuiterie (215, 212), de l'exécution des opérations de chiffrement ou de déchiffrement entre des moteurs d'accélération de matériel (303) respectifs de la pluralité de disques statiques à semi-conducteurs (301₁...301ₙ) sur la base au moins desdits paramètres.

7. Procédé selon l'une quelconque des revendications 1 à 4, dans lequel les disques statiques à semi-conducteurs (301₁...301ₙ) font partie intégrante du serveur (102).

8. Procédé selon la revendication 1, comprenant en outre la fourniture automatique desdites données de sortie associées audit serveur (102).

9. Procédé selon l'une quelconque des revendications précédentes, dans lequel la première circuiterie comporte une circuiterie d'interface d'accélération de travaux.

10. Système comprenant des moyens adaptés à réaliser les étapes du procédé selon l'une quelconque des revendications 1 à 9.

11. Support(s) lisible(s) par ordinateur, comprenant des instructions lisibles par ordinateur qui, lorsqu'elles sont exécutées par des contrôleurs (302) respectifs de disques statiques à semi-conducteurs (301₁...301ₙ) respectifs donnent lieu à la réalisation du procédé selon l'une quelconque des revendications 1 à 9.
